Europäisches Patentamt

European Patent Office

Office européen des brevets

(11) Publication number: **0 270 314**
**A2**

# EUROPEAN PATENT APPLICATION

(21) Application number: 87310490.5

(22) Date of filing: 27.11.87

(51) Int. Cl.⁴: **C01B 33/26** , B01J 29/02

(30) Priority: 04.12.86 US 938098

(43) Date of publication of application:
**08.06.88 Bulletin 88/23**

(84) Designated Contracting States:
**BE DE FR GB IT NL SE**

(71) Applicant: **MOBIL OIL CORPORATION**
**150 East 42nd Street**
**New York New York 10017(US)**

(72) Inventor: **Goldstein, Theodore Philip**
**16 Springtree Lane**
**Yardley Pennsylvania 19067(US)**

(74) Representative: **Colmer, Stephen Gary**
**Patent Department c/o Mobil Services**
**Company Limited Mobil Court 3 Clements**
**Inn**
**London WC2A 2EB(GB)**

(54) **Reactive organo-clay compounds and derivatives thereof.**

(57) In a method for preparing a pillared, reactive and cross-linkable organo-derivative of clay mineral, the mineral is dispersed in water and is then mixed with an organic compound having up to about 10 carbon atoms and having the structure
$R_1$ -ORGANYL-$R_2$
wherein the organyl group is a hydrocarbyl group, $R_1$ is a salt-forming group that in the salt form bears a positive charge, $R_2$ is either a salt-forming group that in the salt form bears a positive charge or a salt-forming group that in the salt form bears a negative charge, $R_1$ and $R_2$ being separated by at least two carbon atoms. The resultant mixture is maintained at a temperature of 25°C to 150°C for 0.1 to 24 hours to produce the required pillared material.

# REACTIVE ORGANO-CLAY COMPOUNDS AND DERIVATIVES THEREOF

This invention is concerned with reactive organo-clay compounds and derivatives thereof useful as catalysts, catalyst supports, selective sorbents, and in some cases as pigments.

The natural smectite minerals have a structure consisting of superposed lamellas separated from each other by a layer of hydrated cations. Each lamella is a two-dimensional polymeric oxyanion formed by two superficial layers consisting of tetrahedral sites bonded to a central layer of octahedral sites. The individual lamellas are about 9.6 Angstrom thick. The 2:1 relation between the tetrahedral and octahedral layers within a lamella is characteristic of the smectite clays. Clays of the smectite type include montmorillonite, beidelite, and montronite. The smectite clays have in common the property that they can undergo cation exchange with metallic and nonmetallic cations including the hydronium ion, i.e. the intercalated cations are mobile. They also have the ability to intercalate metal complexes, organic species, and volatile solvents such as water with increase in the interlayer distance. In some cases, such as with sodium montmorillonite immersed in water, the osmotic swelling leads to such large increase in the interlayer distance with concommitant decrease of interlamellar bonding force as to delaminate the clay. Such peptization is reversed by removal of the water.

It is evident from the foregoing description that the interlamellar distance in the natural smectites is variable and depends to a very large extent on the presence of liquid water. At 100°C to 200°C, the interlamellar space decreases to about the thickness of a monolayer of water. Thus, the smectite minerals do not have the well defined and fixed pore volume characteristic of most inorganic sorbents and microporous inorganic catalysts.

The concept of pillaring smectite clays to create a porous network appears to have been first described by Barrer and MacLeod in Trans. Farad. Soc. Vol. 51, p. 1290 (1955), where they described the use of tetraalkylammonium ions intercalated in such minerals to limit the distance to which the lamellas could be brought together.

Since Barrer and MacLeod's discovery, other pillaring agents including metal chelate complexes have been proposed. The most recent work appears to be concerned with the use of oligomeric multivalent metal cations such as hydroxy aluminum and hydroxy zirconium cations, reported to provide pillared phases with fixed interlayer free spacings in the range of 5 to 20 A. Some of these appear to be thermally stable above 500°C in the absence of water vapor. Such materials are of interest as catalysts and catalyst supports for processing petroleum streams, and as sorbents. U.S. 4,176,090 to Vaughan et al. and U.S. 4,238,364 to Shabtai describe such pillared clays and their utilities. For a literature survey of pillared (and other modified) clay catalysts, reference is directed to a publication by T. J. Pinnavaia in Science, Vol. 220, No. 4595, pp. 365-371 (Apirl 22, 1983).

It should be noted that pillared clays may or may not also be cross-linked, depending on the nature of the "pillar" or prop. Clays containing only intercalated tetra-methyl ammonium and sodium cations are not cross-linked and swell in water much like the parent clay, even though the lamellas cannot approach each other as closely as in the parent clay, i.e. they do not have a fixed pore volume. On the other hand, a highly cross-linked pillared inorganic clay phase will have a substantially fixed pore volume on addition or removal of water or other suitable sorbate. For purposes of the present invention, the term "pillared" will be used to refer to a clay phase substantially free of cross-linking, and the term "cross-linked pillared" to a clay phase which is substantially cross-linked and non-swelling in water or other solvent.

Pillared clay phases in general may be recognized by a basal plane distance (interlamellar or d-spacing) that is larger than that of the parent clay dried at the same temperature. Basal plane distance is readily measured by low angle X-ray diffraction, as is known to those skilled in the art. A cross-linked pillared clay may have a large surface area such as 100 $m^2/g$ and a nitrogen pore volume up to about 0.6 cc/g.

Derivatives of the smectite clays, and particularly the inorganic cross-linked derivatives, are difficult to prepare in reproducible fashion. Because access to the internal regions of the parent clay is not readily achieved in a reasonable length of time, and because with less than 50 volumes of water per gram of clay the mixture tends to be non-uniform and intractable, commercial preparation of derivatives tend to be very costly.

It is an object of this invention to provide a method for preparing a reactive pillared organo-clay compound that is more easily dispersed in water than the parent clay and that is useful as sequestering agent for higher valent metallic ions.

Whereas the smectite clay minerals are known to exhibit cation-exchange behavior, there appears to be no reported instance of such mineral with anion exchange capacity. It is a further object of this invention to provide a pillared organo-clay compound capable of sorbing metallic anions.

Accordingly, the invention resides in a method for preparing a pillared, reactive and cross-linkable organo-derivative of a clay mineral, which comprises:

dispersing said mineral in water,

mixing said dispersion with an organic compound having up to about 10 carbon atoms, said organic compound having the structure

$R_1$-ORGANYL-$R_2$

wherein the organyl group is a hydrocarbyl group, $R_1$ is a salt-forming group that in the salt form bears a positive charge, $R_2$ is either a salt-forming group that in the salt form bears a positive charge or a salt-forming group that in the salt form bears a negative charge, said $R_1$ and $R_2$ being separated by at least two carbon atoms,

maintaining said mixture at a temperature of 25°C to 150°C for 0.1 to 24 hours, and

recovering said pillared, reactive organo-clay derivative.

The clay mineral used in the process of the invention is preferably a smectite clay and usually is montmorillonite, possessing a charge density in the range of 0.8 to 1.1 meg/gram. However, other smectites of lower or higher charge density may be used.

Other expandable sheet-structure clay type minerals believed to be suitable for modification and pillaring by the method of this invention, include vermiculite, nontronite, saponite, hectorite, biotite, magadiite, sauconite, bowlingite, and mixed-layer type minerals such as illite-montmorillonite, rectorite, allevardite, hydromicas, and synthetic sheet-structure aluminosilicates.

The organic compound useful in the present invention has up to 10 carbon atoms and is at least bifunctional, i.e. it has two salt-forming functional groups separated by at least two carbon atoms. By reacting about one millimole of the organic compound per meg of charge on the clay, a pillared (but not cross-linked) clay is formed. The pillared organo-clay product is useful as a sorbent for metal-containing ions having a valence of at least 2. The metal-containing ions can convert the pillared clay to a readily separated cross-linked pillared clay. Thus, the organic-clay product is generally useful for recovering metal values from solution, as will be more fully described hereinbelow.

The organic compound useful in the present invention is described by the general formula

$R_1$-ORGANYL-$R_2$

wherein $R_1$ and $R_2$ represent the two salt-forming groups.

In all cases $R_1$ is a group which, in the salt form, bears a positive charge. Preferred substituents include primary amino and secondary amino groups.

Whether the pillared organo-clay derivative is selective for metal-containing anions having a valence of at least 2 or for metal-containing cations having a valence of at least 2, depends on the nature of $R_2$. Type I product, selective for such anions, is produced from Type I organic compound wherein the substituent $R_2$, in the salt form, bears a positive charge. Preferred substituents may include secondary, or tertiary amino group or a quaternary ammonium group. Type II product, selective for cations having a valence of at least 2, is formed from Type II organic compounds wherein the substituent $R_2$, in the salt form, bears a negative charge. Particularly useful substituents for Type II organic compounds include the sulfonic, phosphonic, and carboxylic groups.

In general, reaction with the organic compound converts the difficult to process smectite to a more tractable product of Type I or Type II. The product is readily reacted with metallic ions having a valence of at least 2 and serves as a sequestering agent for metals recovery and/or as a precursor for metallo-organic derivatives having catalytic or other utility. On calcination, certain metallo-organic derivatives, particularly polynuclear hydroxy metal cations, may be converted to cross-linked pillared clays useful as catalysts in a more controllable fashion than when made by conventional methods.

The term "metallic ion" as used herein includes cations and anions having a valence of at least 2. In particular, "metallic cation" includes simple metallic cations such as cupric, cobaltic, ferrous, ferric, and rare earth cations. The term also includes complex cations that contain heteroatoms such as oxygen, sulfur and nitrogen, in addition to a metal, including polynuclear, clusters such as hydroxyaluminum and hydroxy-zirconium clusters. As used herein, the term "metallic anion" includes simple oxyanions such as tungstate, molybdate and vanadate, and also heteroatom-containing metal anion complexes such as phosphotungstates, phosphomolybdates, chloroplatinate, cyano complexes, and complexes with other organic species.

For purposes of the present invention, it is preferred to use smectites in the alkali metall form for reaction with the organic compound. The charge density of the smectite in meg/gm is readily ascertained by recognized methods, and sometimes is expressed as CEC, (cation exchange capacity).

Reaction of the smectite and the polyfunctional organic compound is readily achieved at a temperature of 25°C to 150°C for 0.1 to 24 hours. Reaction of the organic derivative with the metallic ion proceeds readily under the same conditions in the pH range from 6.5 to 1.0. Adjustment of pH is sometimes useful to control the degree of aggregation of polynuclear ions.

The products produced by this invention often are at least partially in the alkali or other metal form. They may be converted to the hydrogen or to any other form suitable for a particular application by methods known to those skilled in the art, and they may be composited with a hydrogenation component if such is required for the application.

The cross-linked metallo-organic and inorganic smectite derivatives prepared by the method of this invention are useful as catalyst components for a variety of organic compound conversion processes. Such processes include, as non-limiting examples, cracking hydrocarbons with reaction conditions including a temperature of from 300°C to 700°C, a pressure of from 10 to 3040 kPa (0.1 to 30 atmospheres) and a weight hourly space velocity of from 0.1 to 20; dehydrogenating hydrocarbon compounds with reaction conditions including a temperature of from 300°C to 700°C, a pressure of from 10 to 1013 kPa (0.1 to 10 atmospheres) and a weight hourly space velocity of from 0.1 to 20; converting paraffins to aromatics with reaction conditions including a temperature of from 100°C to 700°C, a pressure of from 10 to 6080 kPa (0.1 to 60 atmospheres), a weight hourly space velocity of from 0.5 to 400 and a hydrogen/hydrocarbon mole ratio of from 0 to 20; converting olefins to aromatics, e.g. benzene, toluene and xylenes, with reaction conditions including a temperature of from 100°C to 700°C, a pressure of from 10 to 6080 kPa (0.1 to 60 atmospheres), a weight hourly space velocity of from 0.5 to 400 and hydrogen/hydrocarbon mole ratio of from 0 to 20; converting alcohols, e.g. methanol, or ethers, e.g. dimethylether, or mixtures thereof to hydrocarbons including aromatics with reaction conditions including a temperature of from 275°C to 600°C, a pressure of from 50 to 5065 kPa (0.5 to 50 atmospheres) and a liquid hourly space velocity of from 0.5 to 100; isomerizing xylene feedstock components with reaction conditions including a temperature of from 230°C to 510°C, a pressure of from 300 to 3550 kPa (3 to 35 atmospheres), a weight hourly space velocity of from 0.1 to 200 and a hydrogen/hydrocarbon mole ratio of from 0 to 100; disproportioning toluene with reaction conditions including a temperature of from 200°C to 760°C, a pressure of from 100 to 6080 kPa (1 to 60 atmospheres) and a weight hourly space velocity of from 0.08 to 20; alkylating aromatic hydrocarbons, e.g. benzene and alkylbenzenes, in the presence of an alkylating agent, e.g. olefins, formaldehyde, alkyl halides and alochols, with reaction conditions including a temperature of from 340°C to 500°C, a pressure of from 100 to 20260 kPa (1 to 200 atmospheres), a weight hourly space velocity of from 2 to 2000 and an aromatic hydrocarbon/alkylating agent mole ratio of from 1/1 to 20/1; and transalkylating aromatic hydrocarbons in the presence of polyalkylaromatic hydrocarbons with reaction conditions including a temperature of from 340°C to 500°C, a pressure of from 100 to 20260 kPa (1 to 200 atmospheres), a weight hourly space velocity of from 10 to 1000 and an aromatic hydrocarbon/polyalkylaromatic hydrocarbon mole ratio of from 1/1 to 16/1.

This invention will now be described with reference to the following Examples.

## Example 1

Reaction of Na Bentonite with 2-aminoethylphosphonic acid.

Sixteen grams of Na Bentonite (CEC about 100meg/100gm) were suspended with stirring in about 800 cc hot distilled water. To the dispersed clay suspension was added dropwise a solution of 2 grams of 2-aminoethylphosphonic acid (Aldrich Chem. Co.) [2gm = 16 millimoles] in 200 cc of water. This suspension was stirred with heating overnight, the mixture cooled and the suspended organo-clay material decanted from a small amount (0.4 gm) of grey sandy material present in the parent clay. The decanted organo-clay material remained suspended inthe aqueous system and did not appear to settle.

## Example 2

Reaction of organo-clay (prepared in Example 1) with zirconyl ion solution.

A solution of 2.6 gm of $ZrOCl_2$ (8 $H_2O$) [8 millimoles] in 600 cc of distilled water was added dropwise to the stirred hot water suspension of clay prepared as in Example 1. On addition of the zirconyl solution, the clay suspension took on a white hue, began to flocculate, and precipitated as a white-particulate material when stirring has discontinued. The flocculated sand-free solids were collected by centrifugation, and freed from soluble impurities by resuspension in distilled water followd by recentrifugation. This process was repeated three times. The resulting solids were dried in air at 110°C.

## Example 3

Swelling study of Zr-organo-clay from the above.

The swelling properties of samples of the air-dried Zr-organo-clay prepared in Example 2 and its parent material were examined by using standard procedures. Weighed samples of the pulverized clays were slowly dropped through a column of water, and the final volume of the swelled clays determined. The parent clay swells to about 10 times its original (dry) volume while the volume of the Zr-organo-clay remains essentially unchanged.

## Example 4

The d-spacings of the bentonite used in Example 1 and of the dried product of Example 2 were determined by standard X-ray analytical techniques. The Na Bentonite was found to have a d-spacing of 11-12 Angstroms in its normal state equilibrated with atmospheric moisture. The d-spacing of the Zr-organo-clay product of Example 2, air-dried at 110°C (uncalcined) was 23.4 Angstroms. This material, after heating in air for 10 hours at 300°C, had a d-spacing of 16.1 Angstroms. It is believed that the organic anchoring agent (aminoethylphosphonic acid) is not acting as a pillar in the samples heated at or above 300°C.

## Example 5

Reaction of Na Montmorillonite (Bentolite L-Southern Clay Products, a commercial product in the sodium form) with aminotrimethylenephosphonate (ATP).

40 grams of Bentolite-L were slowly added with stirring to one liter of hot distilled water (stirrer hot plate) at 60°-75°C. The resulting suspension was stirred for an additional two hours at this temperature after which a solution of 3.0 grams of ATP in 400 cc of water was added dropwise and the pH of the system adjusted to about 3.5-4. The cation exchange capacity of the Bentolite L is about 0.8 meg/gram and the molecular weight of ATP is 299, so that an estimated 1/3 of the cation exchange sites on the clay could have been associated with ammonium ions of ATP. The suspension was allowed to cool to ambient temperature and to stir overnight. The resulting clay suspension appeared to be highly dispersed, i.e. peptized.

## Example 6

Reaction of the same Na Montmorillonite as used in Example 5 with 4-methylaminopiperidine (Aldrich Chem. Co.).

Ten grams of the Montmorillonite clay was added slowly to 800 cc of hot distilled water and the resulting yellowish suspension stirred for about two hours. The aqueous system was then adjusted to pH 3-4 with concentrated hydrochloric acid. A solution of 10.6 grams of 4-aminoethylpiperidine in 200 cc of water was adjusted to pH about 2 using hydrochloric acid, and this solution was added dropwise to the clay suspension. This mixture was stirred with heating overnight.

## Example 7

Reaction of organo-clay in Example 6 with Phosphotungstic acid solution.

A solution containing 9.6 grams of reagent grade phosphotungstic acid (assumed to have a formula weight of 3200) in 200 cc of water (pH = 2.3) was added dropwise to a heated suspension of the organo-clay from Example 6 which had been adjusted to pH 2 with concentrated hydrochloric acid. On addition of the phosphotungstic acid solution a white flocculant precipulate formed. The suspension was stirred and heated for an additional three hours after which the system was cooled and the solids collected by centrifugation. The white opaque solids were washed and recentrifuged twice, and dried at 110°C in air overnight.

## Example 8

Reaction of a Na Montmorillonite (Mineral Colloid BP -Southern Clay Products) with 2-aminoethylphosphonic acid.

This experiment was conducted in a manner similar to that described for Example 1. A solution containing 1.0 gm of 2-aminoethylphosphonic acid in 200 cc of water at pH 3 was added dropwise to a stirred suspension of Mineral Colloid BP (Southern Clay Products - CEC of 0.9 meg/gm) in 800 cc of hot water. The suspension was stirred with heating overnight.

## Example 9

Reaction of product of Example 8 with sodium molybdate solution.

A solution containing 4.84 grams of Na molybdate in 200 cc of water adjusted to ph 4 with concentrated HCl was added dropwise to the hot aqueous suspension of organo-clay prepared in Example 8. Unlike the result in Example 7 with the phosphotungstic acid, the clay suspension did not flocculate on addition of the molybdate solution.

## Example 10

Reaction of the Na Bentonite (Mineral Colloid BP) as used in Example 8 with tetramethylammonium bromide.

To 10 grams of the Na Bentonite suspensed with stirring in one liter of hot water in the manner described in prevous examples was added 1.54 grams of tetramethylammonium bromide (0.01 mole) in 100 cc of water. The suspension thickened and gelled.

## Example 11

Reaction of the tetramethylammonium-clay formed in Example 10 with dodecamolybdotetrakis (organo) arsenate.

The dodecamolybdotetrakis (organo) arsenate was prepared by a method described by Pope et al. in Inorg. Chem. 20, 3318 (1981). A solution of 2.5 grams of p-aminophenylarsenic acid (Aldrich Chem. Co.) and 7.3 grams of sodium molybdate in 500 cc of water heated to about 80°C was acidified to about pH 0.6 with concentrated $HNO_3$. The resulting yellow solution was added to the organo-clay material prepared in Example 10 above. The gel appeared to depeptize and a granular ppt. formed. The suspension was heated with stirring overnight. On cooling the next morning the yellow solids were collected by centrifugation and washed and recentrifuged twice more.

The washed-centrifuged material appeared to consist of a "heavy" yellow fraction and a biege gel-like solid. These solids were dried in air at 110°C. X-ray analysis of the yellow solids indicated a weak line corresponding to a d-spacing of about 16 Angstroms and a sharp line corresponding to a d-spacing of 11 Angstroms. The beige colored material exhibited one major low angle peal corresponding to a d-spacing of about 13.3 Angstroms.

## Example 12

10 grams of the same Mineral Colloid BP as used in Example 8 was stirred in 1 liter of hot distilled water until suspended. To this suspension was added dropwise 150 ml of water containing 1.22 cc (9 millimoles) of 1-(2 aminoethyl-1-piperazine) and 27 meg of HCl. After completion of the addition, the clay was well peptized.

## Example 13

The alpha Keggin anion $[PMo_{12}O_{40}]^{-3}$ was prepared by a modification of the procedure described by C. Sanchez et al. in JACS, 104, pp. 3194-3202 (1982). To 120 ml of 1M $Na_2MoO_4$ was added 10 ml of 1M $H_3PO_4$. To this water-clear solution was added 18 ml of concentrated $HNO_3$ (13M) which became yellow. This entire solution was added dropwise to the product of Example 12, using an additional 75 ml of water to rinse the container. The clay suspension became green until about half of the phosphomolybdate solution had been added, but turned progressively yellower as the addition progressed further. The clay suspension became granular and settled readily after completion of the phosphomolybdate addition. The supernatant liquid also was yellow. This preparation was made with excess Keggin anion.

After overnight storage, a portion of the granular yellow solid was filtered, water-washed and centrifuged twice. The resulting yellow, creamy solid was air-dried at 110°C for one hour. When finely ground, these solids suspended in oil acted as an opaque yellow pigment.

## Example 14

A portion of the granular yellow suspension (including yellow supernatant) of Example 13 was treated with several drops of $NaBH_4$ in water. The clay products and supernatant liquid turned blue. This product was water-washed and centrifuged three times and the blue solid air dried for 1 hour at 110°C. When finely ground these solids suspended in oil acted as an opaque blue pigment.

## Example 15

A suspension of 10 grams of the same Mineral Colloid BP clay as used in Example 12 was formed by stirring, using 1 liter of distilled water. To the stirred, heated suspension were added dropwise a previously prepared solution containing 1.03 cc of 4 -(aminoethyl) pyridine (Aldrich Chemical, m. wt. = 108.14, d = 1.065). The pyridine solution was prepared with 100 ml of water acidified to pH = 2 with concentrated HCl. The suspension at this point was slightly flocculated and had an "off white" color.

To the above warm suspension was added the same Keggin anion prepared as in Example 13, but using only one third the quantity of reagents to avoid excess. Reaction of the yellow solution with the clay suspension formed a green solid which settles rapidly from the clear supernatant liquid. The supernatant liquid was decanted and the green solid water-washed and centrifuged twice followed by air-drying at 110°C for one hour.

## Example 16

The product from Example 13 was heated in air at 110°C and at 250°C. The product had an alpha value of about 0.5 and a benzene selectivity of about 20-30%. The material heated at 110°C was found to have a surface area of about 10 $m^2/gm$, and the sample heated at 250°C had a surface area of 28 $m^2/gm$.

As is known in the art, the acid catalytic activity of a zeolite may be measured by its "alpha value", which is the ratio of the rate constant of a test sample for cracking normal hexane to the rate constant of a standard reference catalyst. Thus, an alpha value = 1 means that the test sample and the reference standard have about the same activity. The alpha test is described in U.S. Patent 3,354,078 and in The Journal of Catalysis, Vol. IV, pp. 552-529 (August 1965).

## Example 17

The product from Example 15 was heated in air at 110°C and at 250°C. The product had an alpha value of about 0.3 and a benzene selectivity of 9-16%. The sample heated at 110°C was found to have a surface area of 9 $m^2/gm$. Heating the product at 250°C provided a material with surface area of 13 $m^2/gm$.

## Example 18

A solution of the Keggin Anion $[P Mo_{12} O_{40}]^{-3}$ prepared according to Example 13 was reduced with aqueous $NaBH_4$ to the blue water soluble material described in Example 14. Samples of Na Bentonite suspended and/or stirred with the blue solution do not sorb the blue reduced phosphomolybdate. This behavior is in contrast to that observed in Example 14, where the bentonite contained an organic anchoring agent (1-(2-aminoethyl-1-piperazine).

## Example 19

A sample of bentonite reacted with 1-(2-aminoethyl-1-piperazine), prepared as in Example 12, was stirred with a yellow solution of potassium hexachloroplatinate ($K_2 [Pt Cl_6]$). On filtration of the clay, the filtrate was found to be color free, indicating uptake of chloroplatinate anion by the organo clay material.

## Example 20

In an experiment similar to that described in Example 19, a yellow solution of potassium chloroiridate ($K_4 [Ir Cl_6]$) was stirred with a sample of the organo-clay product prepared as in Example 12. Centrifugation of the solids left an essentially colorless aqueous phase, indicating uptake of the chloroiridate anion by the clay preparation.

## Claims

1. A method for preparing a pillared, reactive and cross-linkable organo-derivative of a clay mineral, which comprises:
dispersing said mineral in water,
mixing said dispersion with an organic compound having up to about 10 carbon atoms, said organic compound having the structure
$R_1$ -ORGANYL-$R_2$
wherein the organyl group is a hydrocarbyl group, $R_1$ is a salt-forming group that in the salt form bears a positive charge, $R_2$ is either a salt-forming group that in the salt form bears a positive charge or a salt-forming group that in the salt form bears a negative charge, said $R_1$ and $R_2$ being separated by at least two carbon atoms,
maintaining said mixture at a temperature of 25°C to 150°C for 0.1 to 24 hours, and
recovering said pillared, reactive organo-clay derivative.

2. The method of Claim 1 wherin $R_1$ is a primary amino, secondary amino, tertiary amino, or quaternary ammonium group.

3. The method of Claim 1 or Claim 2 wherein $R_2$ is a primary amino, secondary amino, tertiary amino, or quaternary ammonium group.

4. The method of any preceding claim wherein $R_2$ is a sulfonate, phosphonate, or carboxyllate group.

5. The method of Claim 1 wherein $R_2$ has a positive change in salt form and including the further steps of adding to the pillared, organo-clay derivative, polynuclear hydroxy metal cations having a valence of at least 2 to form a floc, separating the floc and calcining the floc at 300 - 600°C to form a cross-linked pillared clay derivative.

6. The method of any preceding claim wherein the clay mineral is a smectite clay.

7. The method of any preceding claim wherein one mole of said organic compound per milliquivalent of said clay mineral is added to said dispersion.

8. A method for removing from aqueous solution a metallic anion having a valence of at least 2, which method comprises contacting said solution with a dispersion of the product of the method of Claim 3 under conditions effective to flocculate said dispersion, and separating said floc.

9. A method for removing from aqueous solution a metallic cation having a valence of at least 2, which method comprises contacting said solution with a dispersion of the product of the method of Claim 4 under conditions effective to flocculate said dispersion, and separating said floc.